# FASCICULE DE BREVET EUROPEEN

(11) **EP 1 531 621 B1**
(45) Date de publication et mention de la délivrance du brevet: **19.08.2009**
(21) Numéro de dépôt: 04300769.9
(22) Date de dépôt: 09.11.2004
(51) Int. Cl.: H04N 5/445

(54) **Procédé de commande d'un appareil de restitution audio/vidéo via une interface restreinte**
Verfahren zum Steuern eines Audio/Video-Wiedergabegerätes über eine eingeschränkte Schnittstelle
Method for controlling an audio/video playback apparatus via a restricted interface

(30) Priorité: 14.11.2003 FR 0350835
(43) Date de publication de la demande: 18.05.2005
(73) Titulaire: SAGEM COMMUNICATIONS SAS, 75015 Paris (FR)
(72) Inventeur: Bougaut, Olivier, 92130 Issy-Les-Moulineaux (FR)
(74) Mandataire: Schmit, Christian Norbert Marie

(56) Documents cités:
- WO-A-01/39150
- WO-A-20/05046236
- DE-A- 19 920 162
- US-A1- 2001 013 906
- PATENT ABSTRACTS OF JAPAN vol. 2000, no. 14, 5 mars 2001 (2001-03-05) & JP 2000 312390 A (CANON INC), 7 novembre 2000 (2000-11-07)
- PATENT ABSTRACTS OF JAPAN vol. 2003, no. 02, 5 février 2003 (2003-02-05) & JP 2002 300420 A (SANYO ELECTRIC CO LTD), 11 octobre 2002 (2002-10-11)

## Description

### DOMAINE TECHNIQUE DE L'INVENTION

L'invention a pour objet un procédé de commande d'un appareil de restitution audio/vidéo via une interface restreinte

Le domaine de l'invention est celui des appareils de restitution audio/vidéo, et plus particulièrement le domaine des boîtiers de réception de programmes multimédia, connus sous le nom de set top box, et le domaine des téléviseurs. De tels appareils reçoivent un signal analogique, ou numérique, via une antenne et restitue ce signal sous forme d'un signal vidéo visualisable sur l'écran d'une télévision.

Un but de l'invention et de rendre de tels appareils autonomes du point de vu de leur commande.

Un autre but de l'invention est de pallier la perte, ou la dégradation, de dispositifs annexes de commande de ces appareils.

Par la suite un appareil de restitution est un appareil de restitution audio/vidéo, ou encore un téléviseur ou un boîtier des réception de programmes multimédia.

### ETAT DE LA TECHNIQUE

Dans l'état de la technique les appareils de restitution audio/vidéo offrent de plus en plus de services. En particulier avec l'arrivée de la télévision par satellite ou par câble, le nombre de chaînes disponibles a cru d'un facteur au moins égal à 10, et il n'est pas rare d'avoir le choix entre une centaine de chaînes. Un utilisateur effectue son choix à l'aide d'une télécommande comportant au moins 10 touches numériques, et de nombreuses autre touches permettant de modifier les conditions de restitution, comme par exemple le volume sonore de la restitution. Chaque appareil de restitution est donc livré avec une télécommande.

La démocratisation de ces appareils de restitution entraîne leur production en grandes séries et conduit donc les industriels les produisants à mettre ne oeuvre des politiques de rationalisation des coûts. Ces politiques impliquent entre autre la non duplication de certaines fonctions, en particuliers des fonctions de commandes. Ainsi, comme un appareil de restitution est livré avec une télécommande, les moyens de commande ne sont pas dupliquer sur l'appareil lui même. En effet, la duplication des fonctions de commande demanderait l'intégration à l'appareil de restitution d'une interface mécanique, des boutons, de commande, ce qui accroîtrait les coûts de production, et donc le coût en magasin d'un appareil de restitution. De plus une telle interface mécanique diminuerait la fiabilité de l'appareil car elle constituerait une source de pannes supplémentaire.

Une telle interface de commande est donc totalement absente des boîtiers de réception de programme multimédia, et embryonnaire sur les postes de télévision. Sur ces derniers elle est en général constituée par des paires de boutons cachées dans une trappe du poste de télévision. Une paire de bouton sert à augmenter, et à diminuer, un paramètre unité par unité. Parmi ces paramètres on cite la chaîne visualisée, le volume, la luminosité.... Il y a donc autant de paires de boutons que de paramètres sur lesquels on peut jouer. Dans le cas de la chaîne visualisée, on constate que pour passer de la chaîne 1 à la chaîne 100, il faut appuyer 100 fois sur le bouton + de la paire de boutons affectée au contrôle de la chaîne visualisée. Cette solution est en partie divulguée par le document US6256027 dans lequel il s'agit de régler avec des boutons différentes fonctions d'un appareil vidéo sélectionnées avec lesdits boutons. Dans ce document ce qui est affiché sur l'écran n'est pas l'image de la télécommande dont l'utilisateur a l'habitude, mais un état du paramètre en cours de modification. Cela n'est d'aucune aide à un utilisateur cherchant comment agir sur un paramètre.

Dans l'état de la technique on connaît le document WO 0139150 qui décrit une méthode permettant de vendre un dispositif d'affichage autonome du point de vue de sa commande, par exemple lorsque la télécommande est en panne ou perdue.

Dans l'état de la technique on connaît aussi le document W00178054. Ce document enseigne qu'une interface de commande est reproduite sur un écran. Cependant dans ce document l'utilisateur sélectionne la fonction à distance au moyen d'une dalle sensitive, présente sur une télécommande. L'enseignement de ce document impose donc l'usage d'une télécommande. De plus cette télécommande est d'un genre particulier en ce sens qu'elle comporte une dalle sensitive. En cas de perte de sa télécommande, un utilisateur est d'autant plus désorienté que celle ci était bien particulière.

En cas de perte de sa télécommande, pour une raison quelconque qui peut être due à une panne, un utilisateur se retrouve donc sans interface de commande, ou avec une interface de commande difficilement accessible et dont l'ergonomie, dans le meilleur des cas, ne lui est pas familière. Dans le pire des cas, passage de la chaîne 1 à la chaîne 100, l'ergonomie est totalement inadaptée. L'utilisateur est donc privé de l'usage de son appareil de restitution jusqu'à ce qu'il ait retrouvé ou réparé sa télécommande.

### DESCRIPTION GENERALE DE L'INVENTION

Dans l'invention on résout ces problèmes en fournissant à l'utilisateur une interface de commande qui lui est familière. En cas d'indisponibilité de sa télécommande un utilisateur utilise des boutons qui sont sur la face avant de son appareil pour mettre en oeuvre une solution de substitution. Ces boutons sont de toutes façon présent sur l'appareil, pour sa mise sous tension, sa remise à zéro.... L'utilisateur compose une séquence prédéterminé d'appuis sur ces boutons ce qui provoque l'affichage d'une télécommande dîte virtuelle sur l'écran auquel est connecté l'appareil de restitution. L'utilisateur utilise ensuite les même boutons pour sélectionner et valider des zones, correspondant à des touches d'une télécommande réelle, de la télécommande virtuelle et ainsi provoquer l'action associée à ces zones validées.

Avec l'invention un seul bouton peut suffire. Un appui long permet l'affichage de la télécommande virtuelle. Puis, un appui court permet de passer d'une zone à l'autre, deux appuis courts rapprochés permettent la mémorisation d'une zone sélectionnée, la mémorisation d'une zone de validation permet la mise en oeuvre de la commande associée aux différentes zones précédemment mémorisée. Il ne s'agit là que d'un exemple.

L'invention telle que définie dans les revendications, a donc pour objet un procédé de commande de l'état d'un appareil de restitution de données audio/vidéo comportant au moins un bouton, dans lequel une séquence d'activation, composée d'au moins un appui sur au moins le bouton, provoque l'affichage sur un écran connecté à l'appareil de restitution audio/vidéo d'un menu de commande caractérisé en ce que:
des zones graphiques constituant le menu de commande reproduisent une télécommande virtuelle image de la télécommande à distance habituelle de l'appareil de restitution audio/vidéo.

Avantageusement l'invention est aussi caractérisée en ce qu'une commande est produite et envoyé à un module de commande de l'appareil par une séquence d'appuis sur au moins le bouton de l'appareil.

Avantageusement l'invention est aussi caractérisée en ce que une séquence d'appuis comporte un ou plusieurs appuis sur un ou plusieurs boutons de l'appareil de restitution audio/vidéo.

Avantageusement l'invention est aussi caractérisée en ce que un appui, ou une séquence d'appuis, a une durée prédéterminée.

Avantageusement l'invention est aussi caractérisée en ce que les appuis sont successifs.

Avantageusement l'invention est aussi caractérisée en ce que les appuis sont simultanés.

Avantageusement l'invention est aussi caractérisée en ce que
- une séquence de sélection composée d'au moins un appui sur au moins le bouton de l'appareil de restitution est composée, la composition de cette séquence de sélection provoquant la sélection d'une des zones de la télécommande virtuelle,
- une séquence d'envoi composée d'au moins un appuis sur au moins le bouton de l'appareil de restitution est composée, la composition de cette séquence d'envoi provoquant l'envoi d'une commande au module de commande de l'appareil de restitution en fonction d'au moins la zone de la télécommande virtuelle sélectionnée.

Avantageusement l'invention est aussi caractérisée en ce que
- une séquence de sélection composée d'au moins un appuis sur au moins le bouton de l'appareil de restitution est composée, la composition de cette séquence de sélection provoquant la sélection d'une des zones de la télécommande virtuelle,
- une séquence de mémorisation composé d'au moins un appui sur au moins le bouton de l'appareil de restitution est composée, la composition de cette séquence de mémorisation provoquant la mémorisation de la zone sélectionnée de la télécommande virtuelle,
- les étapes de sélection et mémorisation sont répétées autant de fois que requis par la composition de la commande que l'utilisateur souhaite voire effectuer par l'appareil de restitution,
- une séquence d'envoi composée d'au moins un appui sur au moins le bouton de l'appareil de restitution est composée, la composition de cette quatrième séquence provoquant l'envoi d'une commande au module de commande de l'appareil de restitution en fonction d'au moins la zone de la télécommande virtuelle sélectionnée et de la, ou des, zone de la télécommande virtuelle mémorisée.

Avantageusement l'invention est aussi caractérisée en ce que:
- une séquence d'annulation composée d'au moins un appui sur au moins le bouton de l'appareil de restitution est composée, la composition de cette séquence d'annulation annulant l'affichage de la télécommande virtuelle.

Avantageusement l'invention est aussi caractérisée en ce que le nombre de boutons de l'appareil utilisés pour la composition d'une séquence d'appuis est inférieur aux nombres de zones de la télécommande virtuelle.

Avantageusement l'invention est aussi caractérisée en ce que le nombre de boutons de l'appareil utilisés pour la composition d'une séquence d'appuis est égal à 1, et en ce que le groupe d'appuis formé d'au moins [appui court, appui long, double appui] sur le bouton est en bijection avec le groupe de commandes formé d'au moins [entrer dans le mode télécommande, sélectionner une zone graphique, valider une zone graphique].

Avantageusement l'invention est aussi caractérisée en ce que le nombre de boutons de l'appareil utilisés pour la composition d'une séquence d'appuis est égal à 2, et en ce que le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

Avantageusement l'invention est aussi caractérisée en ce que le nombre de boutons de l'appareil utilisés pour la composition d'une séquence d'appuis est égal à 3, et en ce que le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

Avantageusement l'invention est aussi caractérisée en ce que le nombre de boutons de l'appareil utilisés pour la composition d'une séquence d'appuis est égal à 4, et en ce que le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

Avantageusement l'invention est aussi caractérisée en ce que le nombre de boutons de l'appareil utilisés pour la composition d'une séquence d'appuis est égal à 5, et en ce que le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

L'invention sera mieux comprise à la lecture de la description qui suit et à l'examen des figures qui l'accompagnent. Celle-ci sont présentées à titre indicatif et nullement limitatifs de l'invention.

### BREVE DESCRIPTION DES FIGURES

Figure 1: une illustration de moyens utiles à la mise en oeuvre du procédé selon l'invention.
Figure 2: une illustration d'étapes du procédé selon l'invention.

### DESCRIPTION DES FORMES DE REALISATION PREFEREES DE L'INVENTION

Dans la description on considère que l'appareil de restitution est un boîtier de réception de programmes multimédia. Comme précédemment dit, la description reste valable si l'appareil de restitution est un téléviseur.

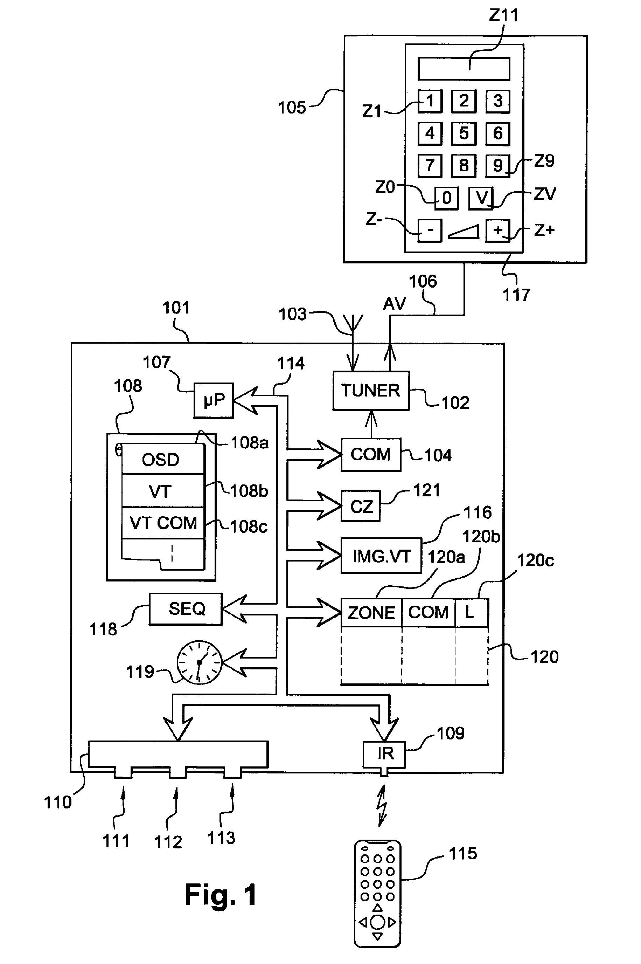

La figure 1 montre un appareil 101 de restitution audio/vidéo. L'appareil 101 comporte un circuit 102 tuner connecté à une antenne 103, à la sortie d'un circuit 104 de commande, et à un écran 105 via un câble 106 audio/vidéo. Le circuit 102 produit un signal vidéo qu'il émet via la câble 106, à partir de signaux reçu via l'antenne 103, et en fonction d'un paramétrage reçu du circuit 104 de commande.

L'écran 105 est dans la pratique un téléviseur.

L'appareil 101 comporte aussi un microprocesseur 107, une mémoire 108 de programme, une interface 109 de commande à distance, et une interface 110 mécanique comportant dans notre exemple 3 boutons 111 à 113.

Les éléments 104 et 107 à 110 sont interconnectés via un bus 114.

Dans le cas général, un utilisateur de l'appareil 101 utilise une télécommande 115 pour émettre des ordres qui sont reçus par l'interface 109 et transmis via le bus 114 au circuit 104 de commande. Le circuit 104 de commande interprète alors ces ordres pour modifier le paramétrage du circuit 102 tuner. Cette interprétation a pour effet direct un changement de chaîne sur le téléviseur 105, une modification du volume sonore, une modification du contraste, de la luminosité... et cela en fonction de la touche de la télécommande 115 qui a été enfoncée par l'utilisateur.

Dans le cas général toujours, chacun des boutons 111 à respectivement 113 a une fonction prédéfinie comme remise à zéro, mise sous tension, respectivement passage en mode télécommande virtuelle.

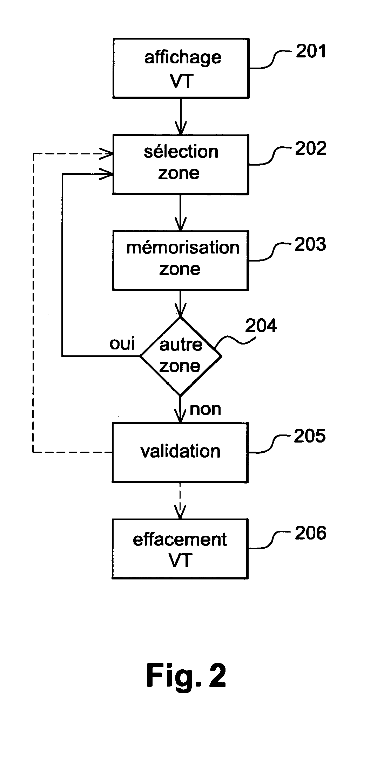

La figure 2 illustre des étapes mise en oeuvre par l'invention pour pallier à l'indisponibilité de la télécommande 115. Dans un premier exemple on considère que l'appareil de restitution comporte 3 boutons 111 à 113. Dans le préambule on a déjà envisagé un exemple avec un seul bouton.

Dans la description on prête des actions à des appareils. Dans la pratique, pour un appareil donné, ces actions sont réalisées par un microprocesseur de l'appareil, ledit microprocesseur étant commandé par des codes instruction enregistrés dans une mémoire de programme dudit appareil.

La figure 2 montre une étape 201 préliminaire de l'invention dans laquelle un utilisateur passe l'appareil 101 de restitution dans un mode de télécommande virtuelle. Ce passage est réalisé, par exemple, par un appui sur le bouton 113 qui est dédié à la réalisation de ce passage. Le fait d'être passé en mode virtuel a au moins deux effets. Le premier effet est l'affichage sur l'écran 105 d'une image 117 représentant une télécommande. Cette image est lue dans une mémoire 116 connectée au bus 114. Cette image est transmise au circuit tuner 102 via le circuit 104 de commande. Cette image est affichée selon un procédé de type OSD (On Screen Display, pour Affichage Sur Ecran) qui permet de faire de l'incrustation d'image. A cet effet à la mémoire 108 comporte une zone 108a comportant des codes instruction pour l'incrustation d'image. Le deuxième effet est la modification des effets liés à des appuis effectués sur les boutons 111 à 113. Ces appuis sont, dans le mode télécommande virtuelle, interprétés en vu de remplacer la télécommande 115 indisponible.

La figure 1 montre que l'image 117 est divisée en zones graphiques, aussi désignée ici comme des zones, chacune de ces zones correspondant à un bouton d'une télécommande réelle. Ces zones sont dites graphiques car elles correspondent à une partie d'une image. En particulier l'image 117 comporte 10 zones Z0 à Z1 correspondant à un clavier numérique, la zone Z0 correspondant au chiffre 0, la zone Z1 correspondant au chiffre 1, ... la zone Z9 correspondant au chiffre 9. L'image 117 comporte aussi une zone ZM représentant le contenu d'une mémoire 118 de séquence. La mémoire 118 est connectée au bus 114. La mémoire 118 permet d'enregistrer des zones graphiques mémorisées par un utilisateur de l'appareil 101 mais non encore validée. Cette mémoire 118 permet ainsi de composer un numéro de chaîne supérieur à 9.

L'image 117 comporte aussi des zones Z- et Z+. La sélection de ces zones permet de diminuer (Z-), ou d'augmenter (Z+) le volume.

L'image 117 comporte aussi une zone ZV pour valider le contenu de la mémoire 118.

Dans notre exemple l'image 117 comporte un nombre de zones limité mais suffisant pour l'illustration de l'invention. Dans la pratique, l'image 117 peut être la réplique exacte de la télécommande indisponible. Dans la pratique l'image 117 peut donc comporter autant de zones que la télécommande indisponible comporte de boutons.

Les zones de l'image 117 sont réparties en lignes.

Dans notre premier exemple la télécommande virtuelle comporte donc 13 zones activables, alors que l'appareil 101 ne comporte que trois boutons. D'une manière générale le nombre de boutons de l'appareil 101 utilisés pour la composition d'une séquence d'appuis est inférieur aux nombres de zones de la télécommande virtuelle.

Dans notre premier exemple une séquence d'activation se résume donc à un appui normal sur le bouton 113. Dans la pratique une séquence d'activation est composée d'appuis sur un ou des boutons de l'appareil 101. Dans une variante cette séquence d'activation peut être un appui long sur l'un des boutons 111 à 113. Dans une autre variante, la séquence d'activation est deux appuis simultanés sur deux boutons parmi les bouton 111 à 113. Dans une autre variante, la séquence d'activation est un double appui sur un ou deux boutons parmi les bouton 111 à 113.

Dans la description un appui long est un appui qui est maintenu plus d'une durée prédéterminée. Cette durée prédéterminée est de l'ordre de la seconde, idéalement 1,5 seconde. Tout appui d'une durée inférieur est un appui dit normal ou court.

Dans la description un double appui est une séquence de deux appuis successifs effectué dans une intervalle de temps inférieur à une durée prédéterminée. Cette durée prédéterminée est de l'ordre de la seconde, idéalement 1 seconde. Un double appui est l'équivalent d'un double click sur un bouton d'une souris.

Dans la pratique l'appareil 101 comporte une horloge 119 connectée au bus 114 et permettant la mesure de durées.

De l'étape 201 on passe à une étape 202 de sélection d'une zone de la télécommande virtuelle, c'est à dire la sélection d'une zone de l'image 117. Dans la pratique, lorsque l'appareil 101 est basculé en mode télécommande virtuelle, l'image 117 est affichée, et une des zones de cette image est affichée de manière à être distinguée des autres zones. Cette distinction se fait soit en mettant la zone en surbrillance, soit en entourant graphiquement la zone avec une couleur vive, soit en faisant clignoter cette zone, soit par tout autre moyen. La zone ainsi distinguée est la zone active, ou zone sélectionnée. Dans notre exemple, la zone active au passage en mode télécommande virtuelle, c'est à dire à la sortie de l'étape 201, est la zone Z5. Il s'agit en effet d'une zone centrale dans l'image 117. A un instant donné, il ne peut y avoir qu'une seule zone active.

L'appareil 101 comporte une mémoire 121 permettant d'enregistrer un code de la zone active.

Dans l'étape 202, l'utilisateur de l'appareil 101 utilise les boutons 111, et 112 pour modifier la zone active. C'est à dire pour parcourir les zones de la télécommande virtuelle. Dans un exemple les boutons 111 et 112 sont utilisés comme suit:
- un appui court sur le bouton 111: la zone active devient la zone située à gauche de la zone active avant l'appui sur le bouton 111. Si il n'y a pas de zone à gauche de la zone active avant l'appui sur le bouton 111, alors la zone active devient la zone la plus à droite de la ligne située au dessus de la ligne contenant la zone active avant l'appui sur le bouton 111. Si il n'y a pas de ligne au dessus de la ligne contenant la zone active avant l'appui sur le bouton 111, alors on utilise la ligne la plus basse de l'image 117.
- un appui court sur le bouton 112: la zone active devient la zone située à droite de la zone active avant l'appui sur le bouton 111. Si il n'y a pas de zone à droite de la zone active avant l'appui sur le bouton 112, active alors la zone active devient la zone la plus à gauche de la ligne située au dessous de la ligne contenant la zone active avant l'appui sur le bouton 112. Si il n'y a pas de ligne au dessous de la ligne contenant la zone active avant l'appui sur le bouton 112, alors on utilise la ligne la plus haute de l'image 117.

On constate dors et déjà qu'il est possible de parcourir l'ensemble des zones de l'image 117, avec deux boutons, et ce dans deux sens de parcours. On note qu'en se limitant à un seul bouton, on obtient le même résultat, mais avec un seul sens de parcours.

Dans une variante, et en plus des actions déjà décrites lors de l'appui sur les boutons 111 ou 112:
- un appui long sur le bouton 111: la zone active devient celle située au dessus de la zone active avant l'appui sur le bouton 111. Si il n'y a pas de zone au dessus de la zone active avant l'appui sur le bouton 111, alors la zone active devient la zone située à la verticale de la zone active avant l'appui sur le bouton 111 et situé sur la ligne la plus basse de l'image 117.
- un appui long sur le bouton 112: la zone active devient celle située au dessous de la zone active avant l'appui sur le bouton 111. Si il n'y a pas de zone au dessus de la zone active avant l'appui sur le bouton 112, alors la zone active devient la zone située à la verticale de la zone active avant l'appui sur le bouton 112 et situé sur la ligne la plus haute de l'image 117.

Cette variante permet de réduire le nombre d'appui nécessaire pour aller d'une zone à une autre dans l'image 117.

On constate ici que cette variante peut aussi être mise en oeuvre si on ne considère qu'un seul bouton 111 ou 112 pour le parcours des zones de l'image 117.

Ce parcours d'une zone de l'image 117 à une autre zone de l'image 117 constitue une séquence de sélection. Une séquence de sélection est composée d'appuis sur un ou des boutons de l'appareil 101.

A chaque changement de zone active, le contenu de la mémoire 121 est mis à jour.

De l'étape 202, on passe à une étape 203 de mémorisation de la zone active. Dans l'étape 202, l'utilisateur de l'appareil 101 appuie sur le bouton 113, ce qui provoque la mémorisation de la zone active. C'est à dire, un code pour la zone active est enregistré dans la mémoire 118. Dans la pratique il s'agit du transfert du contenu de la mémoire 121 vers la mémoire 118. Dans la mesure ou les zones de l'image 117 sont réparties en lignes, un code pour une zone est un numéro de ligne, et un numéro de colonne, soit un couple (L, C). La mise à jour du code de la zone active se fait donc en augmentant, ou en diminuant, les valeurs de L et C en fonction des appuis effectués par l'utilisateur de l'appareil 101. Dans notre description on utilise un code du type Zx, ou x désigne la zone de manière à simplifier la lecture.

Dans une variante cette mémorisation peut être provoquée par un appui simultané sur deux boutons. Dans ce cas 2 boutons suffisent pour utiliser la télécommande virtuelle. Dans une autre variante cette mémorisation peut être provoquée par un appui très long sur une bouton. Dans ce cas une seule bouton suffit pour utiliser la télécommande virtuelle.

Un appui très long et un appui d'une durée prédéterminée plus longue que celle correspondant à un appui long. De préférence cette durée prédéterminée est deux fois celle correspondant à un appui long.

Cette mémorisation est donc déclenchée par une séquence de mémorisation composée d'appuis sur un ou des boutons de l'appareil 101.

De l'étape 203 on passe à une étape 204 d'analyse de la mémoire 118. Soit la mémoire 118 comporte un ou des codes de zones ne correspondant pas à une commande, dans ce cas le microprocesseur affiche dans la zone ZM le contenu de la mémoire 118, et on repasse à l'étape 202. Soit le contenu de la mémoire 118 correspond à une commande et on passe à l'étape 205 de validation du contenu de la mémoire 118.

Dans l'étape 203, pour déterminer si il s'agit d'une commande, le microprocesseur 107 parcourt une mémoire 120 connectée au bus 114. La mémoire 120 est une table divisée en lignes et en colonnes. Chaque ligne correspond à une zone de l'image 117. La table 120 comporte au moins 3 colonnes. Une colonne 120a correspond à un code de zone. Une colonne 120b correspond à un code de commande. Si la case code de commande est vide, cela signifie qu'il n'y a pas de commande associée à la zone. Une colonne 120c comporte un label devant être utilisé si le contenu de la mémoire 118 devait être affiché ou interprété.

Dans la pratique la mémoire comporte aussi une colonne de coordonnées relatives à la position de la zone sur l'écran 105. Il est donc possible, à partir d'un parcours de la mémoire 120 de déterminer ou afficher un label en fonction de zone active.

Dans notre exemple aucune des zones Z0 à Z9 ne correspond à une commande. Leur mémorisation provoque donc l'affichage du contenu de la mémoire 118. Si l'utilisateur de l'appareil 101 mémorise successivement les zone Z4 puis la zone Z6, alors la zone ZM affichera successivement 4, puis 46. Cet affichage est réalisé grâce au contenu de la colonne 120c.

Si l'utilisateur de l'appareil 101 mémorise l'une des zones Z-, Z+, ou ZV, alors une commande leur est associée et on passe donc de l'étape 204 à l'étape 205. La mémorisation de l'une des zones auxquelles est associée une commande dans la mémoire 120 équivaut à la composition par l'utilisateur d'une séquence d'envoi.

Dans la pratique il est possible qu'à chaque zone de la télécommande virtuelle corresponde une commande. Dans ce cas la séquence de mémorisation d'une zone équivaut à une séquence d'envoi. On parle alors d'une séquence de validation d'une zone. Dans ce cas, à chaque séquence de mémorisation/envoi, une commande est produite est envoyée au circuit 104. Cette commande est alors celle qui aurait été envoyé par le circuit 109 si l'utilisateur avait appuyée sur le bouton de la télécommande distante équivalent à la zone de la télécommande virtuelle validée par la séquence de mémorisation/envoi.

Dans les étapes 202 à 206 le microprocesseur 107 est commandé par des codes instructions d'une zone 108b de gestion du mode de télécommande virtuelle.

Dans l'étape 205, le microprocesseur 107, commandé est aussi commandé par des codes instructions d'une zone 108.c d'interprétation du contenu de la mémoire 118.

Dans l'étape 205, le microprocesseur associe à chaque code de zone lu dans la mémoire 118 la commande qu'il trouve dans la table 120. Ces commande sont celles qui auraient été émises par le circuit 109 si l'utilisateur avait appuyé sur les touches de la télécommande correspondant aux zones de l'image 117 mémorisées par l'utilisateur. Dans l'étape 205, le microprocesseur produit donc une commande destinée au circuit 104. Cette commande résulte d'une séquence d'appuis effectuée par l'utilisateur de l'appareil 101. Cette séquence est composée d'au minimum une séquence de sélection et d'une séquence d'envoi. Cette séquence modifie l'état de l'appareil 101 car la commande produite est interprétée par les circuits 104 et 102, ce qui provoque: un changement de chaîne, une modification du volume, une modification du contraste, ... la liste n'est pas exhaustive. En ce sens, l'appareil 101 change d'état.

La mémoire 120 permet donc d'associer à chaque touche de la télécommande 115 un code de zone dans l'image 117, et vice et versa.

Dans notre exemple l'utilisateur peut donc baisser le volume, en activant la zone Z-, augmenter le volume, en activant la zone Z+.

L'utilisateur peut aussi changer de chaîne en composant un numéro par une mémorisation successive de zones parmi les zones Z0 à Z9, puis en mémorisant la zone ZV. La mémorisation de la zone ZV provoque l'interprétation du contenu de la mémoire 118. Cette interprétation envoi une commande correspondant au numéro précédemment composé via les mémorisations successives. Dans une variante, le contenu de la mémoire 118 est validé par un double appui sur le bouton 113. Dans une autre variante, le contenu de la mémoire 118 est validé par deux appuis simultanés longs sur les boutons 111 et 112. Dans ces variantes il devient donc inutile de sélectionner la zone ZV.

Dans la variante dans laquelle à chaque zone de la télécommande virtuelle est associée une commande, c'est le circuit 104 qui gère le flux de commande reçu de manière à déterminer quelle chaîne l'utilisateur souhaite sélectionner. Cette détermination se fait de la même manière que si l'utilisateur utilisait la télécommande distante. Dans l'invention, le circuit 104 ne connaît pas l'origine des commandes qu'il reçoit. Il les traite donc toutes comme si elles venaient d'une télécommande distante.

De l'étape 205 on passe soit à l'étape 202, soit à une étape 206 de sortie du mode de télécommande virtuelle. Quoiqu'il en soit, à la fin de l'étape 205, le contenu de la mémoire 118 est effacé.

Le passage de l'étape 205 à l'étape 206 est provoqué par un appui long sur le bouton 113. Il s'agit alors d'une séquence d'annulation. Une séquence d'annulation est composée d'appuis sur un ou des boutons de l'appareil 101.

Dans une variante, le passage de l'étape 205 à l'étape 206 est provoqué par une longue période d'inactivité sur les boutons 111 à 113. Une longue période étant de l'ordre de 5 secondes.

Dans notre premier exemple on a illustré le fait qu'il est possible de commander un appareil de restitution audio vidéo à l'aide d'à peine 3 boutons, voir moins dans les variantes.

On propose une liste non exhaustive d'autres exemples. Chacun de ces exemples comporte des descriptions de combinaison de boutons à employer pour réaliser les actions de:
- entrer dans le mode télécommande virtuelle,
- parcours des zones,
- mémorisation d'une zone,
- validation du contenu de la mémoire 118, et
- sortie du mode télécommande virtuelle.

Dans une variante ou chaque zone de la télécommande virtuelle correspond a une commande, l'étape de validation du contenu de la mémoire 118 est facultative. Dans cette variante, l'étape de mémorisation est en fait une étape de validation, ou vice et versa. Dans cette variante, et si on considère qu'une inactivité prolongée sur les boutons de l'appareil 101 permet de sortir du mode de télécommande virtuelle, alors n'importe quelle fonction permettant que le groupe d'appuis formé d'au moins [appui court, appui long, double appui, appuis simultanés] sur au moins un des boutons de l'appareil 101 utilisé pendant le mode télécommande virtuel soit en relation avec le groupe de commande formé d'au moins [entrer dans le mode télécommande, sélectionner une zone graphique, valider une zone graphique], de manière à ce que chacune des commandes puisse être passée convient. La liste des exemples à suivre n'est donc pas exhaustive.

Dans un deuxième exemple n'utilisant que deux boutons 111, et 112, on peut procéder comme suit:
- entrer dans le mode télécommande virtuelle: appuis simultanés courts sur les boutons 111 et 112,
- parcours des zones: utilisation des boutons 111 et 112 comme décrit dans le premier exemple,
- mémorisation d'une zone: double appui sur le bouton 111,
- validation du contenu de la mémoire 118: appuis simultanés courts sur les boutons 111 et 112,
- sortie du mode télécommande virtuelle: appuis longs simultanés sur les boutons 111 et 112, ou temporisation d'inactivité.

Dans un troisième exemple n'utilisant qu'un bouton 111, on peut procéder comme suit:
- entrer dans le mode télécommande virtuelle: appui long le bouton 111,
- parcours des zones: appuis court sur le boutons 111 pour passer d'une zone à l'autre,
- mémorisation d'une zone: double appui sur le bouton 111,
- validation du contenu de la mémoire 118: appui très long sur le bouton 111,
- sortie du mode télécommande virtuelle: temporisation d'inactivité.

Dans un quatrième exemple utilisant quatre boutons, un premier bouton B1, un deuxième bouton B2, un troisième bouton B3, et un quatrième bouton B4, on peut procéder comme suit:
- entrer dans le mode télécommande virtuelle: appui court sur le bouton B4,
- parcours des zones: appuis court sur les boutons B1 et B2 comme décrit pour les boutons 111 et 112,
- mémorisation d'une zone: appui court sur le bouton B3,
- validation du contenu de la mémoire 118: double appui sur le bouton B3,
- sortie du mode télécommande virtuelle: appui court sur le bouton B4.

Dans un cinquième exemple utilisant cinq boutons, un premier bouton B1, un deuxième bouton B2, un troisième bouton B3, un quatrième bouton B4, et un cinquième bouton B5, on peut procéder comme suit:
- entrer dans le mode télécommande virtuelle: appui court sur le bouton B5,
- parcours des zones: appuis court sur les boutons B1 à B4 selon que l'on veut aller à gauche, aller à droite, monter, ou descendre parmi les zones de l'image 117,
- mémorisation d'une zone: appui court sur le bouton B5,
- validation du contenu de la mémoire 118: double appui sur le bouton B5,
- sortie du mode télécommande virtuelle: appui long sur le bouton B5.

Cette liste d'exemples n'est pas exhaustive. Il apparaît clairement qu'une séquence d'appuis est une succession temporelle d'appuis sur un ou plusieurs boutons dans laquelle les boutons enfoncés, les durées d'enfoncement, et le cadencement des enfoncements sont interprétés. Les combinaisons sont donc nombreuses, et l'invention n'est pas limitée à ces illustrations.

Dans l'invention, il arrive que la séquence de mémorisation soit confondue avec la séquence d'envoi, comme c'est le cas pour le traitement des zones Z-, Z+, et ZV. On parle alors d'un séquence de validation d'une zone.

Dans l'invention, pour la séquence d'annulation d'appuis, on peut considérer qu'une période suffisamment longue sans appui est cette séquence d'annulation.

## Revendications

1. Procédé de commande de l'état d'un appareil (101) de restitution de données audio/vidéo comportant :
- au moins un bouton (111-113) situé sur une face avant *dudit* l'appareil, **caractérisé en ce que**:
- une *étape préliminaire* d'activation *(201)*, composée d'au moins un appui sur *ledit* bouton, provoque l'affichage sur un écran (105) connecté à l'appareil de restitution audio/vidéo *d'une image* d'une télécommande virtuelle (117) représentant une télécommande *à distance* (115) habituelle de l'appareil de restitution audio/vidéo
- la télécommande virtuelle comporte des zones graphiques (Z0-Z9, Zm, Z-, Z+, Zv) qui correspondent à des touches de la télécommande habituelle,
- *une étape de sélection* (202) *d'une zone graphique de la télécommande virtuelle, composée d'au moins un appui sur ledit bouton,*
- *une étape de mémorisation* (203) *d'un code de la zone graphique dans une mémoire, composée d'au moins un appui sur le ledit bouton,*
- *une étape de validation* (205) *du contenu de la mémoire,* la validation entraînant une mise en oeuvre de commandes (120) de l'état de l'appareil de restitution associées à ladite zone graphique, ces commandes associées à ladite zone graphique correspondant aux commandes de la touche correspondante de la télécommande habituelle.

2. Procédé selon la revendication 1, **caractérisé en ce qu'**une commande est produite et envoyée à un module de commande (104) de l'appareil par une séquence d'appuis sur au moins le bouton de l'appareil.

3. Procédé selon l'une des revendications 1 ou 2, **caractérisé en ce que** une séquence d'appuis comporte un ou plusieurs appuis sur un ou plusieurs boutons de l'appareil de restitution audio/vidéo.

4. Procédé selon l'une des revendications 1 à 3, **caractérisé en ce que** un appui, ou une séquence d'appuis, a une durée prédéterminée.

5. Procédé selon l'une des revendications 1 à 4, **caractérisé en ce que** les appuis sont successifs.

6. Procédé selon l'une des revendications 1 à 4, **caractérisé en ce que** les appuis sont simultanés.

7. Procédé selon l'une des revendications 1 à 6, **caractérisé en ce que**
- une séquence de sélection composée d'au moins un appui sur au moins le bouton de l'appareil de restitution est composée, la composition de cette séquence de sélection provoquant la sélection d'une des zones de la télécommande virtuelle,
- une séquence d'envoi composée d'au moins un appuis sur au moins le bouton de l'appareil de restitution est composée, la composition de cette séquence d'envoi provoquant l'envoi d'une commande au module de commande de l'appareil de restitution en fonction d'au moins la zone de la télécommande virtuelle sélectionnée.

8. Procédé selon l'une des revendications 1 à 6, **caractérisé en ce que**
- une séquence de sélection composée d'au moins un appuis sur au moins le bouton de l'appareil de restitution est composée, la composition de cette séquence de sélection provoquant la sélection d'une des zones de la télécommande virtuelle,
- une séquence de mémorisation composé d'au moins un appui sur au moins le bouton de l'appareil de restitution est composée, la composition de cette séquence de mémorisation provoquant la mémorisation de la zone sélectionnée de la télécommande virtuelle,
- les étapes de sélection et mémorisation sont répétées autant de fois que requis par la composition de la commande que l'utilisateur souhaite voire effectuer par l'appareil de restitution,
- une séquence d'envoi composée d'au moins un appui sur au moins le bouton de l'appareil de restitution est composée, la composition de cette quatrième séquence provoquant l'envoi d'une commande au module de commande de l'appareil de restitution en fonction d'au moins la zone de la télécommande virtuelle sélectionnée et de la, ou des, zone de la télécommande virtuelle mémorisée.

9. Procédé selon l'une des revendications 1 à 8, **caractérisé en ce que:**
- une séquence d'annulation composée d'au moins un appui sur au moins le bouton de l'appareil de restitution est composée, la composition de cette séquence d'annulation annulant l'affichage de la télécommande virtuelle.

10. Procédé selon l'une des revendications 1 à 9, **caractérisé en ce que** le nombre de boutons de l'appareil utilisés pour la composition d'une séquence d'appuis est inférieur aux nombres de zones de la télécommande virtuelle.

11. Procédé selon l'une des revendications 1 à 10, **caractérisé en ce que** le nombre de boutons de l'appareil utilisés pour la composition d'une séquence d'appuis est égal à 1, et **en ce que** le groupe d'appuis formé d'au moins [appui court, appui long, double appui] sur le bouton est en bijection avec le groupe de commandes formé d'au moins [entrer dans le mode télécommande, sélectionner une zone graphique, valider une zone graphique].

12. Procédé selon l'une des revendications 1 à 10, **caractérisé en ce que** le nombre de boutons de l'appareil utilisés pour la composition d'une séquence d'appuis est égal à 2, et **en ce que** le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

13. Procédé selon l'une des revendications 1 à 10, **caractérisé en ce que** le nombre de boutons de l'appareil utilisés pour la composition d'une séquence d'appuis est égal à 3, et **en ce que** le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

14. Procédé selon l'une des revendications 1 à 10, **caractérisé en ce que** le nombre de boutons de l'appareil utilisés pour la composition d'une séquence d'appuis est égal à 4, et **en ce que** le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

15. Procédé selon l'une des revendications 1 à 10, **caractérisé en ce que** le nombre de boutons de l'appareil utilisés pour la composition d'une séquence d'appuis est égal à 5, et **en ce que** le groupe d'appuis formé d'au moins [appui court, appui long, double appui, appuis simultanés] sur au moins un des deux boutons est en relation avec le groupe de commandes formé d'au moins [entrer dans le mode télécommande, sélectionner une zone graphique, valider une zone graphique], pour que chacune des commandes puisse être passée, chaque élément du groupe de commande étant associé à au moins un élément du groupe d'appuis.

## Claims

1. A method for controlling the mode of an audio/video data playback apparatus (101) including:
- at least one button (111-113) located on a front face of said apparatus, **characterised in that:**
- a preliminary activation step (201), comprised of at least one press on said button, enables the display of an image of a virtual remote control (117) representing a usual remote control (115) of the audio/video playback apparatus on a screen (105) connected to the audio/video playback apparatus
- the virtual remote control includes graphical zones (Z0-Z9, Zm, Z-, Z+, Zv) which correspond to usual remote control keys,
- a selection step (202) selecting a graphical zone of the virtual remote control, comprised of at least one press on said button,
- a memorisation step (203) memorising a code of the graphical zone in a memory, comprised of at least one press on said button,
- a validation step (205) validating the content in the memory, validation leading to implementation of commands (120) of the playback apparatus' mode associated with said graphical zone, these commands associated with said graphical zone corresponding to the commands of the key corresponding to the usual remote control.

2. A method according to claim 1, **characterised in that** one command is produced and sent to a command module (104) of the apparatus by a sequence of presses on at least the button of the apparatus.

3. A method according to one of claims 1 or 2, **characterised in that** a sequence of presses includes one or several presses on one or several buttons of the audio/video playback apparatus.

4. A method according to one of claims 1 to 3, **characterised in that** a press or a sequence of presses has a predetermined duration.

5. A method according to one of claims 1 to 4, **characterised in that** the presses are successive.

6. A method according to one of claims 1 to 4, **characterised in that** the presses are simultaneous.

7. A method according to one of claims 1 to 6, **characterised in that**
- a selection sequence is made, comprised of at least one press on at least the button of the playback apparatus, the composition of this selection sequence causing the selection of one of the zones of the virtual remote control,
- a sending sequence is made, comprised of at least one press on at least the button of the playback apparatus, the composition of this sending sequence causing the sending of a command to the command module of the playback apparatus according at least to the selected zone of the virtual remote control.

8. A method according to one of claims 1 to 6, **characterised in that**
- a selection sequence is made, comprised of at least one press on at least the button of the playback apparatus, the composition of this selection sequence causing the selection of one of the zones of the virtual remote control,
- a memorisation sequence is made, comprised of at least one press on at least the button of the playback apparatus, the composition of this memorisation sequence causing the memorisation of the selected zone of the virtual remote control,
- the selection and memorisation steps are repeated as many times as required by the composition of the command that the user wants to be performed by the playback apparatus,
- a sending sequence is made, comprised of at least one press on at least the button of the playback apparatus, the composition of this fourth sequence causing the sending of a command to the command module of the playback apparatus according at least to the selected zone of the virtual remote control and to the memorised zone(s) of the virtual remote control.

9. A method according to one of claims 1 to 8, **characterised in that:**
- a cancellation sequence is made, comprised of at least one press on at least the button of the playback apparatus, the composition of this cancellation sequence cancelling the virtual remote control display.

10. A method according to one of claims 1 to 9, **characterised in that** the number of apparatus buttons used for the composition of a sequence of presses is lower that the number of zones of the virtual remote control.

11. A method according to one of claims 1 to 10, **characterised in that** the number of apparatus buttons used for the composition of a sequence of presses is equal to 1, and **in that** the group of presses formed at least of [short press, long press, double press] on the button is in bijection with the group of commands formed at least of [enter into the remote control mode, select a graphical zone, validate a graphical zone].

12. A method according to one of claims 1 to 10, **characterised in that** the number of apparatus buttons used for the composition of a sequence of presses is equal to 2, and **in that** the group of presses formed at least of [short press, long press, double press, simultaneous presses] on at least one of both buttons is in relation with the group of commands formed at least of [enter into the remote control mode, select a graphical zone, validate a graphical zone] so that each command can be passed, each element of the command group being associated to at least one element of the group of presses.

13. A method according to one of claims 1 to 10, **characterised in that** the number of apparatus buttons used for the composition of a sequence of presses is equal to 3, and **in that** the group of presses formed at least of [short press, long press, double press, simultaneous presses] on at least one of both buttons is in relation with the group of commands formed at least of [enter into the remote control mode, select a graphical zone, validate a graphical zone] so that each command can be passed, each element of the command group being associated to at least one element of the group of presses.

14. A method according to one of claims 1 to 10, **characterised in that** the number of apparatus buttons used for the composition of a sequence of presses is equal to 4, and **in that** the group of presses formed at least of [short press, long press, double press, simultaneous presses] on at least one of both buttons is in relation with the group of commands formed at least of [enter into the remote control mode, select a graphical zone, validate a graphical zone] so that each command can be passed, each element of the command group being associated to at least one element of the group of presses.

15. A method according to one of claims 1 to 10, **characterised in that** the number of apparatus buttons used for the composition of a sequence of presses is equal to 5, and **in that** the group of presses formed at least of [short press, long press, double press, simultaneous presses] on at least one of both buttons is in relation with the group of commands formed at least of [enter into the remote control mode, select a graphical zone, validate a graphical zone] so that each command can be passed, each element of the command group being associated to at least one element of the group of presses.

## Patentansprüche

1. Verfahren zum Steuern des Zustands eines Gerätes (101) zur Wiedergabe von Audio-/Video-Daten mit:
- zumindest einem Knopf (111-113), der sich an der Vorderseite des besagten Gerätes befindet, **dadurch gekennzeichnet, dass:**
- ein *vorbereitender* Aktivierungsschritt (*201*), bestehend aus zumindest einem Druck auf den *besagten* Knopf die Anzeige *eines Bildes* einer virtuellen Fernbedienung (117) auf einem Bildschirm (105) bewirkt, der am Gerät zur Wiedergabe von Audio-/Video-Daten angeschlossen ist, wobei das Bild eine übliche Fernbedienung (115) des Gerätes zur Wiedergabe von Audio-/Video-Daten darstellt
- die virtuelle Fernbedienung grafische Zonen (Z0-Z9, Zm, Z-, Z+, Zv) enthält, die den Tasten der gewöhnlichen Fernbedienung entsprechen,
- *ein Schritt zur Auswahl (202) einer grafischen Zone der virtuellen Fernbedienung, bestehend aus zumindest einem Druck auf den besagten Knopf,*
- *ein Schritt zum Speichern (203) eines Codes der grafischen Zone in einem Speicher, bestehend aus zumindest einem Druck auf den besagten Knopf,*
- *ein Schritt zur Bestätigung (205) des Speicherinhalts*, wobei die Bestätigung eine Umsetzung der Befehle (120) über den Zustand des Wiedergabegerätes bewirkt, die der besagten grafischen Zone zugeordnet werden, wobei diese Befehle, die dieser grafischen Zone zugeordnet werden, den Befehlen der entsprechenden Taste der gewöhnlichen Fernbedienung entsprechen.

2. Verfahren nach Anspruch 1, **dadurch gekennzeichnet, dass** ein Befehl durch eine Folge von Drücken auf zumindest den Knopf am Gerät erzeugt und zu einem Steuermodul (104) des Geräts geschickt wird.

3. Verfahren nach einem der Ansprüche 1 oder 2, **dadurch gekennzeichnet, dass** eine Folge von Druckbetätigungen zumindest eine oder mehrere Druckbetätigungen eines oder mehrerer Knöpfe am Gerät zur Wiedergabe von Audio-/Video-Daten enthält.

4. Verfahren nach einem der Ansprüche 1 bis 3, **dadurch gekennzeichnet, dass** eine Druckbetätigung oder eine Folge von Druckbetätigungen eine vorbestimmte Dauer aufweist oder aufweisen.

5. Verfahren nach einem der Ansprüche 1 bis 4, **dadurch gekennzeichnet, dass** die Druckbetätigungen nacheinander ausgeführt werden.

6. Verfahren nach einem der Ansprüche 1 bis 4, **dadurch gekennzeichnet, dass** die Druckbetätigungen gleichzeitig erfolgen.

7. Verfahren nach einem der Ansprüche 1 bis 6, **dadurch gekennzeichnet, dass**
- eine Auswahlsequenz bestehend aus zumindest einer Druckbetätigung zumindest des Knopfes des Wiedergabegerätes zusammengestellt wird, wobei die Zusammenstellung dieser Auswahlsequenz die Auswahl einer der Zonen der virtuellen Fernbedienung nach sich zieht,
- eine Sendesequenz bestehend aus zumindest einer Druckbetätigung zumindest des Knopfes des Wiedergabegerätes zusammengestellt wird, wobei die Zusammenstellung dieser Sendesequenz die Sendung eines Befehls zum Steuermodul des Wiedergabegerätes in Abhängigkeit von zumindest der ausgewählten Zone der virtuellen Fernbedienung nach sich zieht.

8. Verfahren nach einem der Ansprüche 1 bis 6, **dadurch gekennzeichnet, dass**
- eine Auswahlsequenz bestehend aus zumindest einer Druckbetätigung zumindest des Knopfes des Wiedergabegerätes zusammengestellt wird, wobei die Zusammenstellung dieser Auswahlsequenz die Auswahl einer der Zonen der virtuellen Fernbedienung nach sich zieht,
- eine Speichersequenz bestehend aus zumindest einer Druckbetätigung zumindest des Knopfes des Wiedergabegerätes zusammengestellt wird, wobei die Zusammenstellung dieser Speichersequenz die Speicherung der ausgewählten Zone der virtuellen Fernbedienung nach sich zieht,
- die Auswahl- und Speicherschritte sooft wiederholt werden, wie durch die Zusammenstellung des Befehls nötig ist, den das Wiedergabegerät nach Wunsch des Benutzers ausführen soll,
- eine Sendesequenz bestehend aus zumindest einer Druckbetätigung zumindest des Knopfes des Wiedergabegerätes zusammengestellt wird, wobei die Zusammenstellung dieser vierten Sequenz die Sendung eines Befehls zum Steuermodul des Wiedergabegerätes in Abhängigkeit von zumindest der ausgewählten Zone der virtuellen Fernbedienung und der gespeicherten Zone(n) der virtuellen Fernbedienung zur Folge hat.

9. Verfahren nach einem der Ansprüche 1 bis 8, **dadurch gekennzeichnet, dass:**
- eine Annullierungssequenz bestehend aus zumindest einer Druckbetätigung zumindest des Knopfes des Wiedergabegerätes zusammengestellt wird, wobei die Zusammenstellung dieser Annullierungssequenz die Anzeige der virtuellen Fernbedienung annulliert.

10. Verfahren nach einem der Ansprüche 1 bis 9, **dadurch gekennzeichnet, dass** die Anzahl der für die Zusammenstellung einer Druckbetätigungsfolge verwendeten Knöpfe des Gerätes geringer ist, als die Anzahl der Zonen der virtuellen Fernbedienung.

11. Verfahren nach einem der Ansprüche 1 bis 10, **dadurch gekennzeichnet, dass** die Anzahl der für die Zusammenstellung einer Druckbetätigungsfolge verwendeten Knöpfe des Gerätes gleich 1 ist und **dadurch**, dass die Druckbetätigungsgruppe die zumindest durch [kurzer Druck, langer Druck, Doppeldruck] des Knopfes gebildet wird, eine Bijektion der Befehlsgruppe ist, die zumindest von [Aufruf des Fernbedienungsmodus, Auswahl einer grafischen Zone, Bestätigen einer grafischen Zone] gebildet wird.

12. Verfahren nach einem der Ansprüche 1 bis 10, **dadurch gekennzeichnet, dass** die Anzahl der Knöpfe des Gerätes, die für die Zusammenstellung einer Druckbetätigungsfolge verwendet werden, gleich 2 ist, und **dadurch**, dass die Druckbetätigungsgruppe, die zumindest durch [kurzer Druck, langer Druck, Doppeldruck, gleichzeitiger Druck] zumindest eines der beiden Knöpfe gebildet wird, in Beziehung zur Befehlsgruppe steht, die zumindest von [Aufruf des Fernbedienungsmodus, Auswahl einer grafischen Zone, Bestätigen einer grafischen Zone] gebildet wird, damit jeder der Befehle ausgeführt werden kann, wobei jedes Element der Befehlsgruppe zumindest einem Element der Druckbetätigungsgruppe zugeordnet wird.

13. Verfahren nach einem der Ansprüche 1 bis 10, **dadurch gekennzeichnet, dass** die Anzahl der Knöpfe des Gerätes, die für die Zusammenstellung einer Druckbetätigungsfolge verwendet werden, gleich 3 ist und dadurch, dass die Druckbetätigungsgruppe, die zumindest durch [kurzer Druck, langer Druck, Doppeldruck] zumindest eines der beiden Knöpfe gebildet wird, in Beziehung zur Befehlsgruppe steht, die zumindest von [Aufruf des Fernbedienungsmodus, Auswahl einer grafischen Zone, Bestätigen einer grafischen Zone] gebildet wird, damit jeder der Befehle ausgeführt werden kann, wobei jedes Element der Befehlsgruppe zumindest einem Element der Druckbetätigungsgruppe zugeordnet wird.

14. Verfahren nach einem der Ansprüche 1 bis 10, **dadurch gekennzeichnet, dass** die Anzahl der Knöpfe des Gerätes, die für die Zusammenstellung einer Druckbetätigungsfolge verwendet werden, gleich 4 ist und dadurch, dass die Druckbetätigungsgruppe, die zumindest durch [kurzer Druck, langer Druck, Doppeldruck] zumindest eines der beiden Knöpfe gebildet wird, in Beziehung zur Befehlsgruppe steht, die zumindest von [Aufruf des Fernbedienungsmodus, Auswahl einer grafischen Zone, Bestätigen einer grafischen Zone] gebildet wird, damit jeder der Befehle ausgeführt werden kann, wobei jedes Element der Befehlsgruppe zumindest einem Element der Druckbetätigungsgruppe zugeordnet wird.

15. Verfahren nach einem der Ansprüche 1 bis 10, **dadurch gekennzeichnet, dass** die Anzahl der Knöpfe des Gerätes, die für die Zusammenstellung einer Druckbetätigungsfolge verwendet werden, gleich 5 ist und dadurch, dass die Druckbetätigungsgruppe, die zumindest durch [kurzer Druck, langer Druck, Doppeldruck] zumindest eines der beiden Knöpfe gebildet wird, in Beziehung zur Befehlsgruppe steht, die zumindest von [Aufruf des Fernbedienungsmodus, Auswahl einer grafischen Zone, Bestätigen einer grafischen Zone] gebildet wird, damit jeder der Befehle ausgeführt werden kann, wobei jedes Element der Befehlsgruppe zumindest einem Element der Druckbetätigungsgruppe zugeordnet wird.
